# EUROPÄISCHE PATENTSCHRIFT

(11) **EP 3 308 956 B1**
(45) Veröffentlichungstag und Bekanntmachung des Hinweises auf die Patenterteilung: **07.07.2021**
(21) Anmeldenummer: 16194022.6
(22) Anmeldetag: 14.10.2016
(51) Int. Cl.: B32B 27/08, B29C 37/00, B32B 25/08, B32B 25/16, B32B 27/18, B32B 27/26, B32B 27/30, B32B 27/36, B32B 27/40, C08G 18/67, C08J 7/04, C08G 18/81, C09D 175/16, B29C 35/08

(54) **THERMISCH VERFORMBARE PLATTE**
THERMALLY MOLDABLE PANEL
PLAQUE THERMO-DÉFORMABLE

(43) Veröffentlichungstag der Anmeldung: 18.04.2018
(73) Patentinhaber: Senoplast Klepsch & Co. GmbH, 5721 Piesendorf (AT)
(72) Erfinder: OBERKOFLER, Manfred, 5721 Uttendorf (AT)
(74) Vertreter: Schwarz & Partner Patentanwälte OG

(56) Entgegenhaltungen:
- WO-A1-2005/042248
- WO-A1-2005/080484
- WO-A1-2011/120940
- DE-A1- 19 917 965
- US-A1- 2008 220 250
- None

## Beschreibung

Die Erfindung betrifft eine thermisch verformbare Platte oder Folie sowie ein Verfahren zur Herstellung einer solchen Platte oder Folie. Weiters betrifft die Erfindung eine thermisch verformte Platte sowie diverse Anwendungen solcher Platten.

### Stand der Technik

Thermisch verformbare Platten werden in zahlreichen Anwendungsgebieten eingesetzt, wie z.B. in der Automobilindustrie für Karosseriebauteile von KFZ, LKW, Caravan, Baumaschinen, Nutzfahrzeugen, im Sanitärbereich für Badewannen oder Duschwannen, in der Möbelindustrie als Möbelfolien, in der Bauwirtschaft, bei E&E-Gehäusen, für Freizeit- und Sportgeräte oder in der Bahn- und Flugzeugindustrie. Während solche Platten hervorragend verarbeitbar sind, erreichen sie die im jeweiligen Einsatzgebiet oft geforderten Eigenschaften nicht. Insbesondere sind die mechanischen und physikalisch-chemischen Eigenschaften wie die Kratzfestigkeit, chemische Beständigkeit z.B. für automobile Anwendungen oft nicht ausreichend.

Im Stand der Technik sind bereits verschiedene Lösungen beschrieben, wie man die Oberflächeneigenschaften von solchen thermisch verformbaren Platten erhöhen kann. In EP 1 737 654 B1 wird zum Beispiel ein "dual cure" System beschrieben, bei welchem ein zweistufig härtbarer Lack auf ein bahnförmiges Material per Walzen, Rakel oder Flutung aufgetragen und anschließend physikalisch getrocknet wird, indem das Lösungsmittel des Lacks ausgetrieben wird. Die Platte mit einer solcherart teilgehärteten Lackschicht wird anschließend einem Thermoformen bzw. einer thermoplastischen Verformung unterzogen. Nach der Verformung wird die Lackschicht mittels UV-Strahlung endvernetzt und vollständig ausgehärtet. Bei diesem Stand der Technik ergeben sich zwei Probleme: Erstens ist die teilgehärtete Platte nicht stapelfest und auch nicht lagerstabil. Zweitens gestaltet sich die UV-Härtung an "Schattenstellen", d.h. Stellen die aufgrund der 3D-Geometrie der Platte oder Folie auftreten und der UV-Strahlung unzugänglich sind, schwierig. EP1723194 offenbart eine strahlungshärtbare Verbundschichtplatte oder -folie aus mindestens einer Substratschicht und einer Deckschicht, die eine strahlungshärtbare Masse mit einer Glasübergangstemperatur unter 50 °C mit hoher Doppelbindunsgdichte enthält, ein Verfahren zu deren Herstellung und deren Verwendung. DE19917965 offenbart strahlungshärtbare Verbundschichtplatte oder -folie aus mindestens einer Substratschicht und einer Deckschicht, dadurch gekennzeichnet, daß die Deckschicht aus einer strahlungshärtbaren Masse mit einer Glasübergangstemperatur oberhalb 40 °C besteht.

Ein anderer Ansatz gemäß Stand der Technik verfolgt die Strategie der nachträglichen Lackierung der Platte oder Folie. Dabei wird eine Kunststoffplatte oder -folie thermogeformt und nachträglich lackiert, beispielsweise mittels Sprühlackierung oder Fluten. Obwohl dieses Verfahren an sich gute Ergebnisse liefert, ist es sehr aufwändig und mit viel Overspray und Nacharbeit verbunden. Außerdem können bei diesen Verfahren Beschichtungsstreifen auftreten; bei der Sprühlackierung wird oft ein unerwünschter Orangepeel und beim Fluten ein Regenbogeneffekt beobachtet. Auch bei diesen Verfahren gibt es Probleme mit dem Lackauftrag an jenen Stellen, die aufgrund der Geometrie der thermogeformten Platte schwer zugänglich sind.

Ein dritter Ansatz gemäß Stand der Technik ist der sogenannte Zweikomponentenspritzguss ("2K-Spritzguss"). Bei diesem wird in einer Spritzgießmaschine ein flüssiges Mehrkomponenten-Reaktivsystem in die Kavität des Formwerkzeugs der Spritzgießmaschine eingebracht und beim anschließenden Prägeschritt die Beschichtung gleichmäßig auf der Oberfläche des Formteils verteilt. Die Beschichtung wird im Formwerkzeug ausgehärtet, sodass sich das Bauteil entformen lässt. Nach der Entnahme des Bauteils erfolgt die Aushärtung des Lacks mittels UV-Strahlung. Dieses Verfahren liefert sehr kratzfeste Oberflächen, jedoch ist es extrem kostenintensiv, nur für kleinflächige Bauteile anwendbar und ebenfalls für Schattenstellen ungeeignet. Eine Anwendung für Automobilkarosserien ist in einem vernünftigen Kostenrahmen nur schwer durchführbar.

### Kurzbeschreibung der Erfindung

Alle Verfahren nach dem Stand der Technik sind also entweder kostenintensiv, aufwändig oder liefern keine vollflächig einheitlichen Beschichtungen mit der Lackschicht.

Aufgabe der vorliegenden Erfindung ist es daher eine thermisch verformbare Platte oder Folie bereitzustellen, bei der diese Nachteile nicht auftreten.

Gelöst wird diese Aufgabe durch eine thermisch verformbare Platte oder Folie, umfassend eine thermoplastische Kunststoffplatte oder Kunststofffolie und eine darauf angeordnete Lackdeckschicht mit wenigstens zwei Bestandteilen, dadurch gekennzeichnet, dass die Lackdeckschicht als ersten Bestandteil eine bereits gehärtete, jedoch noch thermoformbare Komponente aufweist und als zweiten Bestandteil eine thermisch härtbare Komponente aufweist.

Eine solche Platte oder Folie kann direkt beim Hersteller der thermoplastischen Kunststoffplatte oder Kunststofffolie bereitgestellt werden, indem auf die thermoplastische Kunststoffplatte oder Kunststofffolie ein Lack aufgebracht wird, der zweistufig härtbar ist. Die erste Stufe der Härtung erfolgt z.B. noch beim Hersteller der thermoplastischen Kunststoffplatte oder Kunststofffolie, während die zweite Stufe - die endgültige Härtung des Lacks - am Ort des Thermoformprozesses und zwar zeitgleich mit dem Thermoformprozess vorgenommen wird.

Die Lackdeckschicht ist nicht so zu verstehen, dass es sich um zwei separate Schichten handelt, mit jeweils einem der beiden Bestandteile. Vielmehr ist die Lackdeckschicht so zu verstehen, dass die zwei Bestandteile der Lackdeckschicht miteinander vermischt bzw. vermengt sind.

Beim Auftragen auf die Kunststofffolie oder -platte ist der Lack noch flüssig ist. Danach erfolgt die Aushärtung des ersten Bestandteils. Der gehärtete erste Bestandteil ist thermoformbar, d.h. bei der Einwirkung von Temperatur und Druck lässt sich der erste Bestandteil reversibel verformen. Nach dem Härten des ersten Bestandteils ist die Lackdeckschicht bereits so hart, dass eine Lagerung und Stapelung der Platten oder Folien bzw. die anschließende Thermoformung einer solchen Platte oder Folie ohne Beeinträchtigung der optischen Beschaffenheit und der Oberflächengüte, insbesondere des Glanzes, möglich ist. Allerdings ist die Lackdeckschicht noch nicht vollständig aus- bzw. durchgehärtet. Bevorzugt weist die Lackdeckschicht nach Härten des ersten Bestandteils und vor der thermischen Härtung des zweiten Bestandteils eine chemische Beständigkeit gegenüber Aceton von unter 5 Minuten auf. Nach dem Härten des zweiten Bestandteils weist die Lackdeckschicht eine chemische Beständigkeit gegenüber Aceton von über 5 Minuten auf.

Es ist daher vorgesehen, dass der erste thermoformbare Bestandteil gehärtet ist, damit eine Thermoformung möglich ist. Ursprünglich beim Auftragen der Lackdeckschicht waren der erste Bestandteil bzw. die Komponenten des ersten Bestandteils noch flüssig und nicht ausgehärtet.

Bevorzugt härtet der zweite Bestandteil der Lackdeckschicht beim Thermoformen der Platte oder Folie vollständig aus. Gegebenenfalls kann noch eine geringe, vorzugsweise thermische, Nachhärtung erforderlich sein. Als Härten wird jener Vorgang verstanden, bei welchem durch Polymerisation der Monomere und Oligomere in der Lackdeckschicht der Polymerisationsprozess einsetzt sodass es zu einer Erhöhung der Härte der Lackdeckschicht kommt.

Unter thermisch verformbarer Platte oder Folie wird verstanden, dass die Platte oder Folie, durch Druck- und Temperatureinwirkung verformbar ist. Bei diesem Verformen härtet der zweite Bestandteil der Lackdeckschicht aus. Die thermisch verformbare Platte oder Folie kann auch thermoplastisch verformbar sein.

In einem weiteren Aspekt betrifft die Erfindung ein Verfahren zur Herstellung einer thermisch verformbaren Folie oder Platte.

Das Verfahren zur Herstellung einer thermisch verformbaren Kunststoffplatte oder Kunststofffolie umfasst die Schritte
(i) Bereitstellen einer thermoplastischen Kunststoffplatte oder Kunststofffolie,
(ii) Aufbringen eines Lackes mit einem ersten härtbaren Bestandteil, welcher im gehärteten Zustand thermoplastisch verformbar ist und einem zweiten, thermisch härtbaren Bestandteil,
(iii) Aushärten nur des ersten härtbaren Bestandteils.

In einem Aspekt betrifft die Erfindung auch ein Verfahren zur Herstellung einer verformten Kunststoffplatte oder Kunststofffolie, umfassend entweder die Schritte
(i) Bereitstellen einer thermoplastischen Kunststoffplatte oder Kunststofffolie,
(ii) Aufbringen eines Lackes mit einem ersten härtbaren Bestandteil, welcher im gehärteten Zustand thermoplastisch verformbar ist und einem zweiten, thermisch härtbaren Bestandteil,
(iii) Aushärten nur des ersten härtbaren Bestandteils, d.h. ohne härten des zweiten Bestandteils,
(iv) Thermoformen der Kunststoffplatte in eine gewünschte dreidimensionale Form bei gleichzeitigem Härten der thermisch härtbaren Komponente;
   oder umfassend die Schritte
   (a) Bereitstellen einer thermoplastisch verformbaren Platte oder Folie der vorgenannten Art und
   (b) Thermoformen der Kunststoffplatte in eine gewünschte dreidimensionale Form bei gleichzeitigem Härten der thermisch härtbaren Komponente.

Anwendungsgebiete solche Platten oder Folien umfassen zum Beispiel die Automobilindustrie, Bahn und die Flugzeugindustrie; die Möbelindustrie; die Bauwirtschaft; den Sanitärbereich; Freizeit- und Sport.

In der Automobilindustrie, bei der Bahn und in der Flugzeugindunstrie kommen z.B. der Exterieurbereich wie Karosseriebauteile von KFZ, LKW, Caravan, Baumaschinen, Nutzfahrzeugen wie Dachmodule, Zierblenden, Stoßfänger, Kofferraumabdeckungen, vollflächige Karosserieteile oder der Interieurbereich wie Blenden, dekorative Tafeln, Zierleisten, Displays, funktionelle Bedieneinheiten etc. in Betracht. In der Möbelindustrie können Möbelfolien, Möbelteile und dergleichen exemplarisch genannt werden. Im Sanitärbereich sind z. B. Badewannen oder Duschwannen zu erwähnen. Allgemein können solche Folien als Gehäuse eingesetzt werden in allen Bereichen der Industrie, für Koffer oder Gerätegehäuse etc. oder in der Bauwirtschaft, bei E&E-Gehäusen, für Freizeit- und Sportgeräte. Insbesondere sind die mechanischen und physikalisch-chemischen Eigenschaften wie die Kratzfestigkeit, chemische Beständigkeit z.B. für automobile Anwendungen beim Stand der Technik oft nicht ausreichend, sodass ein großer Bedarf an erfindungsgemäßen Folien oder Platten besteht.

### Detaillierte Beschreibung der Erfindung:

Nachfolgend werden Vorteile und Details der Erfindung genauer erläutert.

Die Begriffe Folie bzw. Kunststofffolie und Platte bzw. Kunststoffplatte werden im Rahmen der Patentanmeldung synonym verwendet und es sind Folien und Platten gleichermaßen gemeint auch wenn nur Folie oder Platte erwähnt wird.

### Kunststofffolie oder -platte:

Die thermoplastische Kunststoffplatte oder -folie stellt den Träger für die Lackdeckschicht dar und sie ist thermisch verformbar. Die thermoplastische Kunststofffolie kann ein- oder mehrschichtig ausgebildet ein. Im Falle einer mehrschichtigen thermoplastischen Kunststoffplatte oder -folie ist diese bevorzugt ein Coextrudat. Bevorzugt ist die Kunststoffplatte oder -folie ein flächiger Mehrschichtverbundkörper, welcher eine Substratschicht und zumindest eine weitere Schicht umfasst.

Als Hauptbestandteil für die thermoplastische Kunststoffplatte oder -folie werden thermoplastische Werkstoffe wie thermoplastische Polymere verwendet. Als thermoplastischer Werkstoff wird im Rahmen der Erfindung ein Kunststoff verstanden, der sich in einem bestimmten Temperaturbereich thermoplastisch verformen lässt. Die thermoplastische Verformbarkeit ist ein reversibler Vorgang, sodass der thermoplastische Werkstoff durch Abkühlen und Aufwärmen bis in den verformbaren Zustand beliebig oft wiederholt werden kann. Unter thermoplastischen Werkstoffen werden reine Kunststoffe (Homopolymere, Hetero- bzw. Copolymere) und Kunststoffblends (Mischungen verschiedener Kunststoffe) zusammengefasst.

Als thermoplastische Werkstoffe können Polyolefine, Styrolpolymere, Polycarbonat (PC), Polyacrylate, Polyester usw. genannt werden. In der Gruppe der Polyolefine können z.B. Polyethylen oder Polypropylen genannt werden. In der Gruppe der Styrolpolymere können z.B. Acrylnitril-Butadien-Styrol Terpolymere (ABS), Polystyrol (PS), impact modifiziertes Polystyrol (HI-PS), Acrylnitril- Styrol- Acrylester (ASA), andere Co-polymere umfassend Styroleinheiten genannt werden. Bei den Polyestern seien erwähnt Polyethylenterephthalat (PET) oder modifizierte Copolymere wie glykolmodifiziertes Polyethylenterephthalat (PETG). Zu den wichtigsten Vertretern der Polyacrylate zählt Polymethylmethacrylat (PMMA) und impact modifiziertes Polymethylmethacrylat (HI-PMMA). Weiters können die thermoplastischen Werkstoffe z.B. Thermoplastische Elastomere (TPE), Thermoplastische Elastomere auf Olefinbasis (TPO) oder Thermoplastisches Polyurethan (TPU) sein.

Weiters kann auch ein Blend an Kunststoffen als thermoplastischer Werkstoff vorliegen bzw. kann es erforderlich sein, zusätzliche Stoffe zuzusetzen, um gewünschte Eigenschaften zu erzielen. Als Blends der zuvor genannten Kunststoffe können z.B. ABS/PMMA oder ABS/PC genannt werden.

Ist die thermoplastische Kunststoffplatte oder -folie mehrschichtig ausgebildet, können die einzelnen Schichten ebenfalls die vorgenannten Polymere enthalten. Kombinationen aus PMMA und ABS oder PC und PMMA, wie z.B. Kunststofffolien mit ABS oder PC als Hauptkomponente für die Trägerschicht und PMMA als weitere Schicht der Kunststofffolie sind erwähnenswert. Auf die obere Schicht der Kunststofffolie (z.B. PMMA) ist dann die Lackschicht aufgebracht.

Gegebenenfalls können die Schichten Mahlgut, Recyclat oder Regenerat (z.B. von vorangegangenen Produktionsschritten oder dem Einstellen der Extrusionsanlage oder dem Randbeschnitt) enthalten. Auch können Farbmittel und/oder UV-Additive zugesetzt sein.

Es können auch Mattierungsmittel zugesetzt werden, worunter man im Allgemeinen Zusatzstoffe versteht, welche die Oberfläche einer Beschichtung so beeinflussen, dass sich ihr Glanzgrad senkt. Meist damit verbunden ist eine Erhöhung der Oberflächenrauhigkeit, welche im Folgeprozess, dem Laminieren ein verbessertes Verarbeitungsverhalten zeigt. Geeignete Mattierungsmittel sind dem Fachmann bekannt und umfassen z.B. anorganische Füllstoffe, insbesondere Kieselsäure oder vernetzte Polymere in Perlenform ("Polymerperlen"), vorzugsweise Acrylatperlen. Die zugesetzte Menge beträgt vorzugsweise zwischen 0,1 Gew. % und 5 Gew. %.

Unter Farbmittel werden Pigmente, Farbstoffe oder Effektpigmente bezeichnet. Im Gegensatz zu Farbstoffen sind Pigmente in dem Trägermedium unlöslich. Als Trägermedium bezeichnet man dabei den Stoff, in den das Pigment eingearbeitet wird, beispielsweise einen Lack oder einen Kunststoff. Farbstoffe und Pigmente gehören gemeinsam zu den Farbmitteln und können anorganisch oder organisch, bunt oder unbunt sein.

Der ultraviolette Anteil des Sonnenlichtes kann zu Photodegradation führen. Um Effekte dieser Art zu unterbinden oder zu verzögern, können UV-Additive zugesetzt werden. In Abhängigkeit von der Wirkungsweise dieser UV-Additive unterscheidet man in UV- Absorber und UV- Stabilisatoren. UV- Absorber führen zu einer Absorption der UV-Strahlung, welche durch das Polymer hindurchtritt und wandeln es in Wärmeenergie um. UV- Stabilisatoren hemmen die freien Radikale, welche durch die Bestrahlung mit UV-Strahlung entstehen, und stoppen die weitere Zersetzung.

Die Dicke der Substratschicht beträgt bevorzugt zwischen 50 µm und 5 mm. Allfällige zusätzliche Schichten weisen bevorzugt eine Dicke zwischen 5 µm und 1 mm auf.

### Lackdeckschicht:

Der Lack für die Lackdeckschicht ist ursprünglich ein Mehrkomponentenlack (zumindest ein Zweikomponentenlack) oder ein Lack der zumindest zwei Komponenten enthält, die unterschiedlich aushärten. Konkret sind Mehrkomponentenlacke eine Mischung aus Monomeren und Oligomeren, die auf unterschiedliche Art Polymerisieren (= Aushärten).

Im vorliegenden Fall sind zwei Bestandteile vorgesehen, die unabhängig voneinander aushärten können. Der erste Bestandteil ist im fertigen Produkt (der thermisch verformbaren Platte oder Folie) bereits ausgehärtet. Der erste Bestandteil im Lack ist eine mittels UV-Licht härtbare Komponente, d.h. im fertigen Produkt ein mittels UV-Licht gehärteter Bestandteil.

Mögliche mittels UV-Licht härtbare Komponenten können zum Beispiel Acrylatoligomere wie Urethan(meth)acrylat-Oligomere enthalten, wie z.B. Laromer® UA 9072 von BASF. Weitere Inhaltsstoffe sind Reaktivverdünner, Photoinitiatoren, gegebenenfalls Entschäumer und UV-Additive.

Bevorzugt ist vorgesehen, dass die UV-Lichthärtbare Komponente Acrylatoligomere, vorzugsweise Urethan(meth)acrylat-Oligomere, Reaktivverdünner und Photoinitiatoren umfasst. Photoinitiatoren sind chemische Verbindungen, die nach Bestrahlung mit UV-Licht einer Photolyse unterliegen und so reaktive Spezies wie Radikale bilden und eine Polymerisation veranlassen können. Reaktivverdünner sind Stoffe, welche die Viskosität des Lackes herabsetzen und bei der anschließenden Härtung des Lackes durch Copolymerisation Teil des Lackes werden. Beispielsweise kommen Epoxide, Styrol oder Acrylate in Frage.

Als UV-Licht wird im Rahmen der Erfindung Strahlung mit einer Wellenlänge im Bereich von ca. 380 nm bis 10 nm verstanden.

Im Gegensatz zu herkömmlichen Zweikomponenten-Lacksystemen weist die Formulierung keine Topfzeit auf.

Die thermisch härtbare Komponente umfasst bevorzugt geblockte (oder blockierte) Isocyanate und Polyole. Ein geblocktes Isocyanat ist eine Additionsverbindung eines hochreaktiven Isocyanats z.B. mit Alkoholen ("Urethane") oder mit Aminen ("Harnstoffe"). Bei höheren Temperaturen werden diese Isocyanate dann wieder freigesetzt, um dann die Polymerisationsreaktion mit den Polyolen als Reaktionspartner einzugehen. Als Polyole können z.B. aromatische Polyester Polyole genannt werden, wie z.B. Terol 250 ®Polyol von Huntsman.

Die Lackdeckschicht wird hergestellt durch Aufbringen des Lackes auf das Substrat und Teilaushärten. Das Teilaushärten betrifft nur die ersten Komponente und nicht die zweite Komponente. Durch Verwendung von UV-Additiven (UV-Absorber und UV-Stabilisatoren) im Ausmaß von 0,01 bis 5 Gew. % werden die in den darunter liegenden Schichten eingesetzten Werkstoffe und Farbmittel vor UV-Einstrahlung geschützt, wodurch die Farbstabilität sowie die gleichbleibenden Materialeigenschaften über die Verwendungsdauer bei Bestrahlung mit UV-Licht deutlich verbessert wird. Des Weiteren kann die Deckschicht bzw. der UV-Lack transparent oder mit unterschiedlichen Farbmitteln ausgeführt sein. In der Lackschicht können auch Nanopartikel zur Verbesserung diverser Eigenschaften enthalten sein.

Es sind zahlreiche Verfahren zum Aufbringen von Beschichtungen bekannt. So können Streichen, Rollen, Sprühen, Fluten, Gießen, Rakeln, Trommeln, Spachteln und Walzen genannt werden. Mittels dieser Verfahren werden Lacksysteme appliziert, die in der Regel organische Lösungsmittel oder Wasser oder beides enthalten. Die Lösungsmittel werden nach dem Beschichtungsvorgang meist in Trockenkammern abgelüftet, weshalb ein großer Energie- und Platzbedarf besteht.

Bevorzugt ist der Lack im Wesentlichen frei von Lösungsmitteln, da Lösungsmittel umweltbedenklich sind. Auch weisen Lösungsmittelhaltige Lacke andere Nachteile auf, die sich zum Beispiel daraus ergeben, dass durch das Abdampfen des Lackes Dickenschwankungen in der Lackschicht ergeben können.

Die Lackdeckschicht kann sowohl glänzend oder matt ausgebildet sein.

Da viele Kunststoffe wie z.B. PMMA/ABS bzw. PC/PMMA Coextrudate bei zwischen 140 °C und 210 °C thermoformbar sind, ist das geblockte Isocyanat bevorzugt ein solches, welches zwischen 140°C und 210°C, bevorzugt 160°C bis 190°C, besonders bevorzugt zwischen 165°C bis 185°C °C das Isocyanat freisetzt. Als geblockte Isocyanate können beispielsweise aromatische Isocyanate (z.B. monomere Diphenyl- methandiisocyanate) und/oder aliphatische Isocyanate (z.B. Isophorondiisocyanat) zugegeben werden. Durch geeignete Zusatzstoffe wie Blockierungsmittel kann die Temperatur eingestellt werden, bei welcher der zweite Bestandteil aushärtet.

Der Lack muss vor dem thermischen Aushärten des zweiten Bestandteils thermoformbar sein. Nach dem thermischen Aushärten (d.h. nach dem Härten auch des zweiten Bestandteils) kann der Lack immer noch thermoplastische verformbar sein, er kann aber auch duroplastisch ausgebildet sein.

Es besteht weiters die Möglichkeit, eine Schutzfolie auf die teilvernetzte Lackschicht aufzubringen, um die Oberfläche für den Transportvorgang sowie die Weiterverarbeitung zu schützen. Schutzfolien dieser Art bestehen in der Regel aus Polyethylen oder PET, sie können rückseitig eine Haftschicht aufweisen.

Die Dicke der Deckschicht beträgt bevorzugt zwischen 1 µm und 100 µm, vorzugsweise etwa 5 bis 20 µm.

Das Mischungsverhältnis zwischen dem ersten Bestandteil und dem zweiten Bestandteil beträgt bevorzugt zwischen 3:1 und 1:3 nach Massenanteilen.

Unter thermisch härtbare Komponente werden alle Inhaltsstoffe zusammengefasst, die für die thermische Aushärtung erforderlich sind, während unter UV-Licht härtbare Komponente alle Inhaltsstoffe zusammengefasst werden, die mittels UV-Licht härten.

Beispiele und weitere Vorteile der Erfindung:
- Fig. 1: zeigt schematisch den Aufbau einer thermisch verformbaren Platte gemäß dem Beispiel.
- Fig. 2a, 2b: zeigen FT-IR Spektren, die den Einfluss der Temperatur auf die Aushärtung der Deckschicht belegen, wobei Fig. 2b eine Detailansicht im Bereich 750 bis 1050 cm^{.-1} zeigt.

Ein Vorteil der Erfindung ist, dass entweder der Arbeitsschritt der nachträglichen Lackierung oder der UV-Härtung entfällt. Auch die Stapelfestigkeit der Platte mit der teilausgehärteten Lackschicht ist vorteilhaft gegenüber dem Stand der Technik. Ein weiterer Vorteil liegt in der gleichmäßigeren Aushärtung des dreidimensional geformten Bauteils.

Die thermisch verformbare Platte kann mit einer Schutzfolie verformt werden, was bei herkömmlichen Dual-cure Systemen nicht möglich ist, weil nur physikalisch vernetzt wird. Dadurch wird die Oberfläche im Verarbeitungsprozess und bei weiteren Verarbeitungsschritten bzw. beim Transport zusätzlich geschützt. Das Thermoformen ist auf herkömmlichen Anlagen möglich. Die Lackdeckschicht-Oberfläche ist nach dem Härten des ersten Bestandteils (und vor dem Aushärten des zweiten Bestandteils) fingertrocken, stapelfest und lagerstabil. Die Lackschicht ist elastisch und verstreckbar.

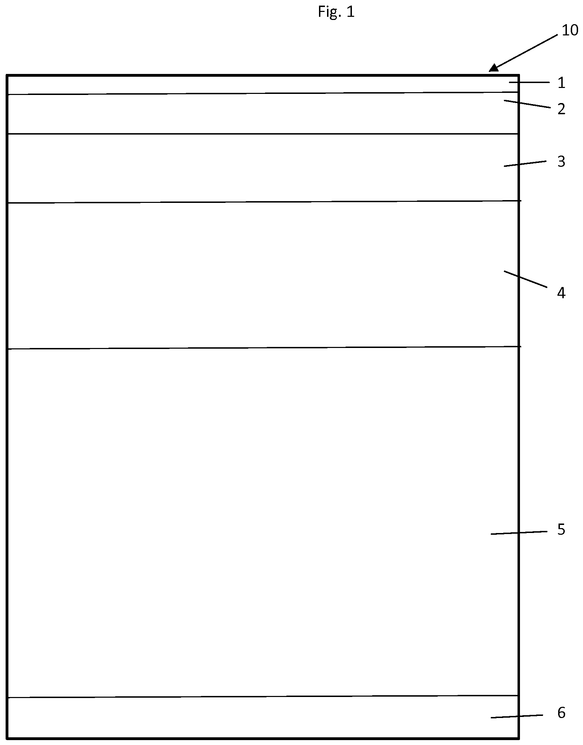

In der nachfolgenden Tabelle sind die erzielten Eigenschaften in Abhängigkeit der Thermoformparameter anhand eines Beispiels aufgelistet. Dabei handelt es sich um einen Verbundkörper mit folgendem Aufbau:
Verbundkörper mit Schichtaufbau (siehe Fig. 1):

| | | |
|---|---|---|
| 1 | Lackdeckschicht | 10 µm |
| 2 | PMMA | 30 µm |
| 3 | PMMA | 60 µm |
| 4 | PC/ABS-Blend | 150 µm |
| 5 | PC/ABS-Blend mit Regenerat | 1010 µm |
| 6 | PC/ABS-Blend | 40 µm |

Die Schichten 2 bis 6 wurden coextrudiert und auf die Schicht 2 wurde mittels Walze ein Lack als Lackdeckschicht (Schicht 1) aufgetragen. Die Zusammensetzung des Lacks umfasst eine Mischung aus den in Tabelle 1 zusammengefassten Komponenten:

**Tabelle 1: Zusammensetzung des Lacks der Lackdeckschicht:**

| | **Komponente** | **Gew. %** | **Beschreibung** |
|---|---|---|---|
| 1 | Urethan(meth)acrylat-Oligomer | 35 | Laromer® UA 9072 |
| 2 | 1,6-Hexandioldiacrylat | 10 | Reaktivverdünner |
| 3 | 2,4,6-Trimethylbenzoyldiphenyl-phosphineoxid | 3 | Ciba® Darocur®TPO Photoinitiator |
| 4 | Isocyanat | 25 | Isophorondiisocyanat |
| 5 | Polyol | 24 | Terol 250 ® |
| 6 | 3,5-Dimethylpyrazol | 2 | Blockierungsmittel |
| 7 | Dibutylzinndilaurat (DBTL) | 1 | Meister ZI 4401 Katalysator |

Die Bestandteile 1 bis 3 des Lacks gemäß Tabelle 1 bilden den ersten Bestandteil mit einer acrylischen Komponente. Die Bestandteile 1 bis 3 wurden mittels UV-Licht ausgehärtet und die resultierende Komponente ist nach dem Aushärten thermoplastisch verformbar.

Die Mischung der Komponenten 4 bis 7 bildet den zweiten Bestandteil der Lackdeckschicht. Diese Komponenten werden in einem zweiten Schritt ausgehärtet. In der nachfolgenden Tabelle 2 wurden Eigenschaften der Lackdeckschicht nach Härten der ersten Komponente ("vor Verformung") untersucht und nach Härten der zweiten Komponenten mittels thermischer Behandlung durch Thermoformung. Die Thermoformungstemperatur liegt bei 180 °C.

**Tabelle 2: Untersuchung der Lackschicht nach dem Aushärten des ersten Bestandteils und vor bzw. nach dem Aushärten des zweiten Bestandteils.**

| Behandlungstemperatur [C°] | Acetontest nach DIN EN 12720:2009 Einwirkdauer 5 Min) | Fingernageltest (gemäß BMW Group Standard GS 97034-2)^{a} | Sonnencremetest nach GMW14445 |
|---|---|---|---|
| Vor Verformung | 1 | 3 | 4 |
| 160 | 1 | 3 | 4 |
| 170 | 2 | 1 | 1 |
| 180 | 5 | 1 | 1 |
| 190 | 5 | 1 | 1 |
| 200 | 5 | 1 | 1 |

| | | | |
|---|---|---|---|
| ^{a} Durchgeführte Prüfung: Fingernageltest nach BMW Group Standard GS 97034-2 Fingernageltester Kunststoff = PMMA Duchmesser = 16 mm; Dicke 1 mm Rundungsradius vom Scheibenrand = 0,5 mm Harte = Shore D85 Prüfgeschwindigkeit = 200 (+/- 20) mm/s; Prüfkraft = 20 N | | | |

Bewertung der Ergebnisse gemäß Fingernageltest:
Note 1: keine Spur sichtbar (keine Veränderung der Oberfläche)
Note 2: Schwache / leichte Spur sichtbar
Note 3: Deutliche Spur sichtbar.

### Bewertung der Ergebnisse gemäß Acetontest:

Die Prüffelder werden durch den Vergleich mit der Referenzfläche für jede Flüssigkeit nach folgendem beschriebenen Einstufungscode bewertet, Einstufungscode nach DIN EN 12720:2009-07:

| | |
|---|---|
| 5 = | Keine sichtbaren Veränderungen (keinen Beschädigung) |
| 4 = | Leichte Glanz- oder Farbveränderung (Spiegelung) oder eine erkennbare abgegrenzte Markierung |
| 3 = | Leichte Markierung aus mehreren Blickwinkeln zu sehen, z.B. fast vollständiger Kreis oder Kreisfläche |
| 2 = | Starke Markierung (Ränder), die Oberflächenstruktur ist jedoch weitgehend unverändert |
| 1 = | Starke Markierung, die Oberflächenstruktur ist verändert oder das Oberflächematerial ist ganz oder teilweise zerstört oder das Papier haftet an der Oberfläche |

### Bewertung des Sonnencremetests gemäß GMW 14445:

| | |
|---|---|
| 1 = | Keine Veränderung |
| 2 = | Leichte Glanz oder Farbveränderung, leichte Aufquellung oder sonstige tolerierbare Effekte/Veränderungen |
| 3 = | Signifikante Glanz oder Farbveränderung, starke Aufquellung, Blase, Ablösungen oder sonstige nicht tolerierbare Effekte/Veränderungen |
| 4 = | Sehr signifikante Glanz oder Farbveränderung, sehr starke Aufquellung, Blase, Ablösungen oder sonstige nicht tolerierbare Effekte/Veränderungen |

Fig. 1 zeigt schematisch die thermisch verformbare Platte des Beispiels im Querschnitt, umfassend eine Deckschicht 1 und eine thermoplastische Kunststoffplatte, die insgesamt fünf Schichten 2, 3, 4, 5, 6 umfasst. Die Substratschicht 5 nimmt dabei den Hauptanteil ein. Die übrigen Schichten 2, 3, 4, 6 können zusätzliche mechanische und/oder optische Eigenschaften beitragen. Auf der Oberfläche der Lackdeckschicht 1 ist im gezeigten Beispiel eine Schutzfolie 10 angedeutet. Die Kunststofffolie oder -platte muss natürlich nicht 5 Schichten enthalten, kann z.B. auch nur eine oder zwei oder mehrere Schichten aufweisen.

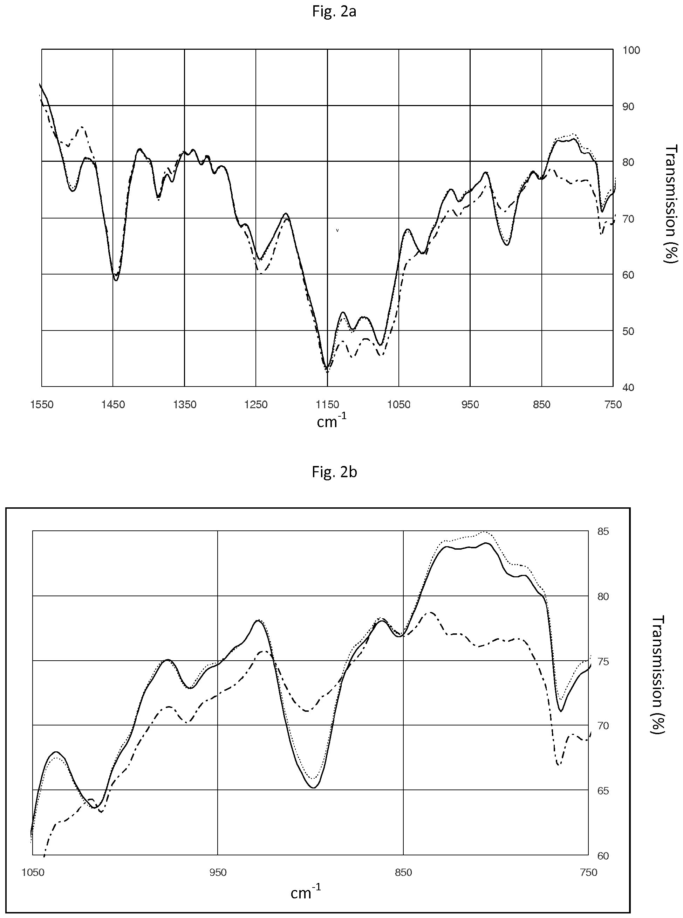

Fig. 2 zeigt FT-IR Spektren der Lackdeckschicht 1 gemäß der Erfindung. Die durchgezogene Linie zeigt die Lackdeckschicht nach Lackauftrag und Aushärten des ersten Bestandteils (der Acrylkomponenten 1 bis 3 im gezeigten Beispiel) auf die Kunststoffplatte. Danach wurde diese Platte bei 70 °C für 24 Stunden vorgetrocknet, um die Restfeuchtigkeit der Kunststoffplatte zu entfernen. Das FT-IR Spektrum der Lackdeckschicht ist punktiert dargestellt. Der Unterschied zur Messung vor der Lagerung bei 70°C / 24 Stunden ist gering.

Nach Thermoformung der Platte (strichpunktierte Linie) ändert sich das FT-IR Spektrum signifikant, insbesondere wird die Transmission bei der charakteristischen Bande bei rund 900 cm^{.1} deutlich höher. Die physikalisch-chemischen Eigenschaften der Oberfläche der Lackdeckschicht nach Härten des zweiten Bestandteils verbesserten sich dabei signifikant. Es überraschte, dass eine thermische Härtung als abschließender Härteschritt einer Lackdeckschicht für Kunststoffe dieselbe Oberflächenqualität (physikalisch und chemisch) lieferte als eine UV-Härtung als abschließender Schritt. Bei der thermischen Härtung von Lacken auf Kunststoffen konnten herkömmlich nie derartige Ergebnisse erzielt werden.

## Patentansprüche

1. Thermisch verformbare Platte oder Folie umfassend eine thermoplastische Kunststoffplatte oder Kunststofffolie (2, 3) und eine darauf angeordnete Lackdeckschicht (1) mit wenigstens zwei Bestandteilen, wobei die Lackdeckschicht (1) als ersten Bestandteil eine bereits gehärtete, thermoformbare Komponente aufweist und als zweiten Bestandteil eine thermisch härtbare Komponente aufweist, **dadurch gekennzeichnet, dass** die bereits gehärtete, thermoformbare Komponente eine mittels UV-Licht gehärtete Komponente ist, wobei die thermisch härtbare Komponente so gewählt ist, dass sie bei einer Temperatur härtet, bei welcher die thermoplastische Kunststoffplatte oder Kunststofffolie (2, 3) thermoformbar ist, wobei die Temperatur, bei welcher die thermisch härtbare Komponente härtet zwischen 140 und 210 °C, vorzugsweise zwischen 160 und 190 °C und besonders bevorzugt zwischen 165 und 185 °C liegt.

2. Thermisch verformbare Platte oder Folie nach Anspruch 1, **dadurch gekennzeichnet, dass** die thermoplastische Kunststoffplatte oder Kunststofffolie (2, 3) ein- oder mehrschichtig ausgebildet ist und thermoplastische Werkstoffe aus gewählt aus der Gruppe der Polyolefine, Styrolpolymere, Polycarbonat, Polyacrylate, Polyester, der thermoplastische Elastomere, Thermoplastische Elastomere auf Olefinbasis oder Thermoplastisches Polyurethan aufweisen.

3. Thermisch verformbare Platte oder Folie nach Anspruch 1 oder Anspruch 2, **dadurch gekennzeichnet, dass** die bereits gehärtete, thermoformbare Komponente ein Polymer ist, welches aus Acrylatoligomeren, Reaktivverdünnern und Photoinitiatoren herstellbar ist.

4. Thermisch verformbare Platte oder Folie nach einem der Ansprüche 1 bis 3, **dadurch gekennzeichnet, dass** die thermisch härtbare Komponente aus geblockten Isocyanaten und Polyolen herstellbar ist.

5. Thermisch verformbare Platte nach einem der Ansprüche 1 bis 4, **dadurch gekennzeichnet, dass** auf der Deckschicht (3) eine Schutzfolie (4) angeordnet ist.

6. Verformte Platte oder Folie, umfassend eine Platte oder Folie nach einem der Ansprüche 1 bis 5, wobei die thermisch härtbare Komponente ausgehärtet ist.

7. Bauteil, umfassend eine thermoplastisch verformte Platte nach Anspruch 6.

8. Bauteil nach Anspruch 7, **dadurch gekennzeichnet, dass** das Bauteil ein Karosseriebauteil, ein Sanitärbauteil, eine Möbelfolie oder ein Gehäuse ist.

9. Verfahren zur Herstellung einer thermisch verformbaren Kunststoffplatte oder Kunststofffolie nach einem der Ansprüche 1 bis 5, umfassend die Schritte
(i) Bereitstellen einer thermoplastischen Kunststoffplatte oder Kunststofffolie (2, 3),
(ii) Aufbringen eines Lackes mit einem ersten mittels UV-Licht härtbaren Bestandteil, welcher im gehärteten Zustand thermoplastisch verformbar ist und einem zweiten, thermisch härtbaren Bestandteil, wobei der Lack flüssig aufgebracht wird,
(iii) Aushärten nur des ersten härtbaren Bestandteils mittels UV-Licht,
wobei der Lack nach dem Aushärten des ersten härtbaren Bestandteils thermoformbar ist.

10. Verfahren zur Herstellung einer verformten Kunststoffplatte oder Kunststofffolie nach Anspruch 6,
umfassend die Schritte
(a) Bereitstellen einer thermisch verformbaren Platte oder Folie nach einem der Ansprüche 1 bis 5 oder hergestellt in einem Verfahren nach Anspruch 9,
(b) Thermoformen der Kunststoffplatte oder Kunststofffolie in eine gewünschte dreidimensionale Form bei gleichzeitigem Härten der thermisch härtbaren Komponente.

## Claims

1. A thermally deformable plate or film, comprising a thermoplastic plastic plate or plastic film (2, 3) and, arranged thereupon, a lacquer cover layer (1) having at least two constituents, wherein the lacquer cover layer (1) has an already cured, thermally deformable component as first constituent and a thermally curable component as second constituent, **characterized in that** the already cured, thermally deformable component is a UV-cured component cured by means of UV light, wherein the thermally curable component is selected such that it will cure at a temperature, at which the thermoplastic plastic plate or plastic film (2, 3) is thermally deformable, wherein the temperature, at which the thermally curable component cures, is in a range between 140 and 210 °C, preferably between 160 and 190 °C and especially preferably between 165 and 185 °C.

2. A thermally deformable plate or film according to claim 1, **characterized in that** the thermoplastic plastic plate or plastic film (2, 3) is configured to be mono- or multi-layered and has thermoplastic materials selected from the group of polyolefins, styrene polymers, polycarbonate, polyacrylate, polyester, thermoplastic elastomers, thermoplastic elastomers on the basis of olefins or thermoplastic polyurethane.

3. A thermally deformable plate or film according to claim 1 or claim 2, **characterized in that** the already cured, thermally deformable component is a polymer, which may be produced from acrylate oligomers, reactive diluents and photo initiators.

4. A thermally deformable plate or film according to any of claims 1 to 3, **characterized in that** the thermally curable component may be produced from blocked isocyanates and polyols.

5. A thermally deformable plate or film according to any of claims 1 to 4, **characterized in that** there is arranged a protective layer (4) on top of the cover layer (3).

6. A deformed plate or film, comprising a plate or film according to any of claims 1 to 5, wherein the thermally curable component has been cured.

7. An element, comprising a thermoplastically deformed plate according to claim 6.

8. An element according to claim 7, **characterized in that** the element is a car body element, a sanitary element, a furniture film or a housing.

9. A method for the production of a thermally deformable plastic plate or plastic film according to any of claims 1 to 5, including the following steps:
(i) providing a thermoplastic plastic plate or plastic film (2, 3),
(ii) applying a lacquer having a first UV-curable constituent, which is thermoplastically deformable in the cured condition, and a second, thermally curable constituent, wherein the lacquer is applied in a liquid state,
(iii) curing only the first curable constituent by means of UV-light,
wherein the lacquer will be thermally deformable upon curing of the first curable constituent.

10. A method for the production of a deformed plastic plate or plastic film according to claim 6, including the following steps:
(a) providing a thermally deformable plate or film according to any of the claims 1 to 5 or produced in a method according to claim 9,
(iv) thermoforming the plastic plate or the plastic film into a desired three-dimensional shape while simultaneously curing the thermally curable component.

## Revendications

1. Plaque ou feuille thermo-déformable comprenant une plaque de plastique ou une feuille de plastique thermoplastique (2, 3) et une couche de revêtement en vernis (1) dotée d'au moins deux constituants, dans laquelle la couche de revêtement en vernis (1) possède comme premier constituant un composant thermo-formable déjà durci et comme deuxième constituant un composant thermodurcissable, **caractérisée en ce que** le composant thermo-formable déjà durci est un composant durci par la lumière UV, le composant thermodurcissable étant choisi de telle sorte qu'il durcit à une température à laquelle la plaque de plastique ou la feuille de plastique thermoplastique (2, 3) est thermo-formable, la température à laquelle le composant thermodurcissable durcit étant située entre 140 et 210 °C, de préférence entre 160 et 190 °C et de façon particulièrement préférable entre 165 et 185 °C.

2. Plaque ou feuille thermo-déformable selon la caractéristique 1, **caractérisée en ce que** la plaque de plastique ou la feuille de plastique thermoplastique (2, 3) est constituée d'une ou plusieurs couches et contient des matières thermoplastiques choisies parmi le groupe des polyoléfines, des polymères de styrène, du polycarbonate, des polyacrylates, du polyester, des élastomères thermoplastiques, des élastomères thermoplastiques à base d'oléfine ou du polyuréthane thermoplastique.

3. Plaque ou feuille thermo-déformable selon la caractéristique 1 ou la caractéristique 2, **caractérisée en ce que** le composant thermo-formable déjà durci est un polymère qui peut être fabriqué à partir d'oligomères d'acrylate, de diluants réactifs et de photo-initiateurs.

4. Plaque ou feuille thermo-déformable selon une des caractéristiques 1 à 3, **caractérisée en ce que** le composant thermodurcissable est fabriqué à partir d'isocyanates bloqués et de polyols.

5. Plaque ou feuille thermo-déformable selon une des caractéristiques 1 à 4, **caractérisée en ce que** sur la couche de revêtement (3) est disposée une feuille de protection (4).

6. Plaque ou feuille déformée comprenant une plaque ou une feuille selon une des revendications 1 à 5, dans laquelle les composants thermodurcissables sont durcis.

7. Pièce comprenant une plaque thermoplastique selon la revendication 6.

8. Pièce selon la revendication 7, **caractérisée en ce que** cette pièce est une pièce de carrosserie, une pièce sanitaire, une feuille pour meuble ou un boîtier.

9. Procédé pour la fabrication d'une plaque de plastique ou d'une feuille de plastique thermo-déformable selon une des revendications 1 à 5, comprenant les étapes suivantes :
(i) préparation d'une plaque de plastique ou d'une feuille de plastique thermoplastique (2, 3),
(ii) application d'un vernis doté d'un premier constituant durcissable par lumière UV qui est thermo-déformable à l'état durci et d'une deuxième constituant thermodurcissable, le vernis étant appliqué à l'état liquide, et
(iii) durcissement uniquement du premier constituant durcissable par la lumière UV,
le vernis étant thermo-formable après le durcissement du premier constituant durcissable.

10. Procédé pour la fabrication d'une plaque de plastique ou d'une feuille de plastique déformée selon la revendication 6, comprenant les étapes suivantes :
(a) préparation d'une plaque ou d'une feuille thermo-déformable selon une des revendications 1 à 5 ou fabriquée dans un procédé selon la revendication 9 et
(b) thermoformage de la plaque de plastique ou de la feuille de plastique dans une forme tridimensionnelle souhaitée avec durcissement simultané des composants thermodurcissables.
